# EUROPEAN PATENT APPLICATION

(11) **EP 4 737 282 A1**
(43) Date of publication of application: **06.05.2026**
(21) Application number: 25197843.3
(22) Date of filing: 25.08.2025
(51) Int. Cl.: B62J 35/00, B62J 11/00, B62K 11/04, B62M 7/04

(54) **SADDLE-TYPE VEHICLE**

(30) Priority: 29.10.2024 JP 2024189472
(71) Applicant: Suzuki Motor Corporation, Shizuoka 432-8611 (JP)
(72) Inventor: TOKUNAGA, Katsuhiko, Hamamatsu-shi (JP); TANAKA, Hiroshi, Hamamatsu-shi (JP); SATO, Toshihiko, Hamamatsu-shi, (JP)
(74) Representative: Haseltine Lake Kempner LLP

(57) **Abstract**

A saddle-type vehicle (1) includes: a pair of tank rails (12) extending rearward from a head pipe (11); a fuel tank (40) supported from below by the pair of tank rails (12); and a pair of relay members (60) attached to both side surfaces of the fuel tank (40). A support surface (45) supported by the pair of tank rails (12) is formed on a bottom surface of the fuel tank (40). The fuel tank (40) is supported by the pair of tank rails (12) via the pair of relay members (60) at a position offset from the support surface (45) in a front-rear direction.

## Description

### TECHNICAL FIELD

The present invention relates to a saddle-type vehicle.

### BACKGROUND ART

A saddle-type vehicle is known in which a fuel tank is covered with a cover member (see, for example, Patent Literature 1). The fuel tank described in Patent Literature 1 has an upper and lower split structure made up of an upper panel and a lower panel, and a flange of the upper panel and a flange of the lower panel are seam-welded. The cover member is attached to a vehicle body so as to hide a flange-shaped joint between the upper panel and the lower panel. The cover member is formed by combining right and left metal side covers and a resin center cover, and the metal side covers increase rigidity against knee grip.

### CITATION LIST

### PATENT LITERATURE

Patent Literature 1: JP2022-184501A

In the above-described saddle-type vehicle, it is desirable for the fuel tank to be supported on a tank rail of a vehicle body frame. However, depending on an installation posture or a shape of the fuel tank, the fuel tank may not be appropriately supported by the tank rail.

### SUMMARY

The present invention is made in consideration of the above-described point, and has an object to provide a saddle-type vehicle in which a fuel tank can be appropriately supported by a tank rail.

A saddle-type vehicle according to an aspect of the present invention includes a pair of tank rails extending rearward from a head pipe, a fuel tank supported from below by the pair of tank rails, and a pair of relay members attached to both side surfaces of the fuel tank, where a support surface supported by the pair of tank rails is formed on a bottom surface of the fuel tank, and the fuel tank is supported by the pair of tank rails via the pair of relay members at a position offset from the support surface in a front-rear direction, thereby solving the above-mentioned problem.

According to the saddle-type vehicle of the aspect of the present invention, the support surface of the fuel tank is supported by the pair of tank rails. At a position which is offset from the support surface of the fuel tank in the front-rear direction and at which the fuel tank is separated from the pair of tank rails due to the fuel tank's posture, shape, or the like, the fuel tank is supported on the pair of tank rails using the pair of relay members. As a result, a load of the fuel tank is distributed over a wide area of the pair of tank rails via the support surface and the pair of relay members, and the fuel tank is stably supported on the pair of tank rails.

### BRIEF DESCRIPTION OF DRAWINGS

FIG. 1 is a left side view of a saddle-type vehicle according to an example.
FIG. 2 is a left side view of a periphery of a fuel tank according to the example.
FIG. 3 is a bottom view of the periphery of the fuel tank according to the example.
FIG. 4 is a left side view of a front portion of the fuel tank according to the example.
FIG. 5 is a cross-sectional view of the front portion of the fuel tank in FIG. 4 taken along a line A-A.
FIG. 6 is a left side view of a rear portion of the fuel tank according to the example.
FIG. 7 is a cross-sectional view of the rear portion of the fuel tank in FIG. 6 taken along a line B-B.
FIG. 8 is a perspective view of a mounting bracket of the example.
FIG. 9 is a perspective view of a relay member of the example as viewed from a front surface side.
FIG. 10 is a perspective view of the relay member of the example as viewed from a rear side.
FIG. 11 is a cross-sectional view of the relay member on a right side of the example taken along the line B-B.
FIG. 12 is a cross-sectional view of the front portion of the fuel tank in FIG. 3 taken along a line C-C.

### DESCRIPTION OF EMBODIMENTS

In a saddle-type vehicle according to an aspect of the present invention, a pair of tank rails extend rearward from a head pipe, and a fuel tank is supported from below by the pair of tank rails. A pair of relay members are attached to both side surfaces of the fuel tank. A support surface is formed on a bottom surface of the fuel tank, and the support surface of the fuel tank is supported by the pair of tank rails. At a position which is offset from the support surface of the fuel tank in the front-rear direction and at which the fuel tank is separated from the pair of tank rails due to the fuel tank's posture, shape, or the like, the fuel tank is supported on the pair of tank rails using the pair of relay members. As a result, a load of the fuel tank is distributed over a wide area of the pair of tank rails (and the fuel tank) via the support surface and the pair of relay members, and the fuel tank is stably supported on the pair of tank rails.

### Example

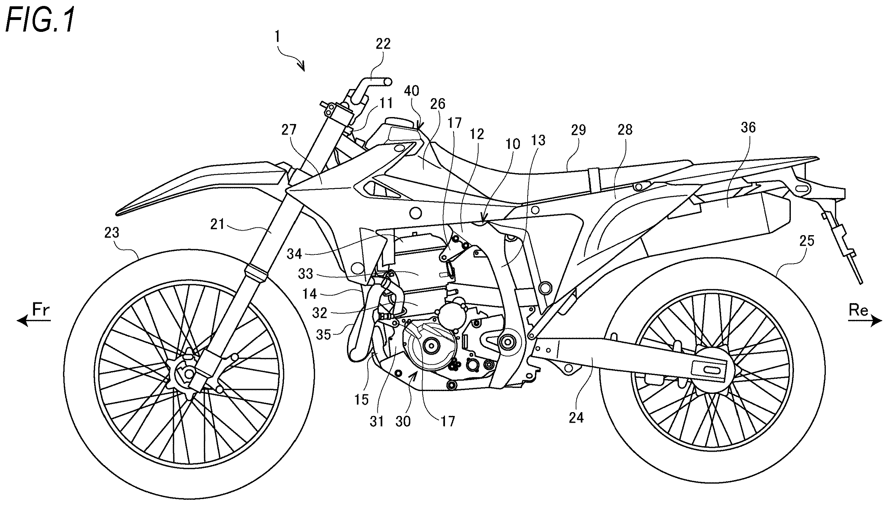

Hereinafter, a saddle-type vehicle according to this example will be described with reference to the accompanying drawings. FIG. 1 is a left side view of the saddle-type vehicle according to the example. In the following drawings, an arrow Fr indicates the front of the vehicle, an arrow Re indicates the rear of the vehicle, an arrow L indicates the left side of the vehicle, and an arrow R indicates the right side of the vehicle.

As illustrated in FIG. 1, a saddle-type vehicle 1 is configured by mounting an engine 30, an electrical system, and various other components on a vehicle body frame 10. A pair of tank rails 12 extend diagonally downward and rearward from a head pipe 11 of the vehicle body frame 10 on the right and left sides, and a pair of body frames 13 extend downward from rear portions of the pair of tank rails 12. A down frame 14 extends downward from the head pipe 11, and an underloop 15 bent rearward is connected to a lower portion of the down frame 14. A rear end of the underloop 15 is connected to a lower portion of the pair of body frames 13, so that the vehicle body frame 10 is formed into a cradle shape.

A front fork 21 is supported on the head pipe 11 via a steering shaft (not illustrated) so as to be steerable. A handlebar 22 is provided on an upper portion of the front fork 21, and a front wheel 23 is rotatably supported on a lower portion of the front fork 21. A fuel tank 40 is placed on an upper portion of the pair of tank rails 12, and the pair of tank rails 12 and the fuel tank 40 are covered by a tank cover 26 and a pair of front side covers (side covers) 27. A seat 29 is installed behind the fuel tank 40, and a seat frame (not illustrated) that supports the seat 29 from below is covered from sides by a pair of rear side covers 28.

A swing arm 24 is supported by the body frame 13 so as to be able to swing. The swing arm 24 extends rearward from the body frame 13, and a rear wheel 25 is rotatably supported at a rear end of the swing arm 24. The engine 30 is suspended inside the vehicle body frame 10 via a plurality of suspension brackets 17. A cylinder assembly, which is made up of a cylinder 32, a cylinder head 33, and a cylinder head cover 34 stacked together, is attached to an upper surface of a crankcase 31 of the engine 30. An exhaust pipe 35 extends downward from a front left side of the cylinder head 33, passes through a right side of the cylinder 32, and is connected to a muffler 36 at the rear of the vehicle.

Meanwhile, a typical off-road vehicle employs a semi-cradle type vehicle body frame, and a fuel tank is mounted so as to straddle a single tank rail. A cross section of the fuel tank is horseshoe shaped, with a bottom surface of the fuel tank being narrow. However, since a broad side surface of the fuel tank is used as a knee grip portion, a cover member for covering the fuel tank is not necessary. Carburetor specifications can be easily used with fuel tanks that have a narrow bottom surface, but Fuel Injection (FI) specifications require an in-tank pump at the bottom surface of the fuel tank, making it difficult to use with horseshoe-shaped fuel tanks that have a narrow bottom surface.

FI-spec off-road vehicles often use a double-cradle type vehicle body frame, with an upper and lower split fuel tank mounted on the vehicle body frame. The upper and lower split fuel tank is formed by seam welding flanges of upper and lower panels. When a tank width is increased to ensure a tank capacity, the flanges of the fuel tank are positioned directly above the tank rail. The flanges are used to distribute a load of the fuel tank, but the flanges do not necessarily come into contact with the tank rail. Therefore, in this example, a relay member is provided on the side surface of the fuel tank, and the relay member is interposed between the flange and the tank rail.

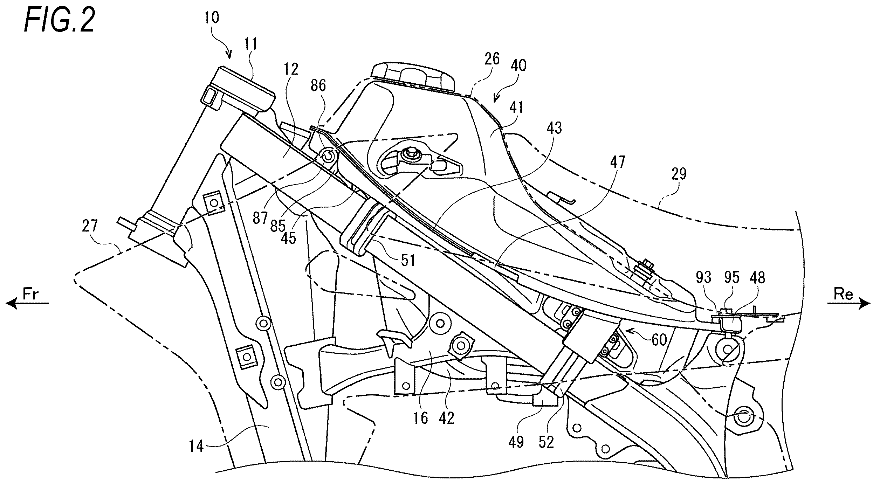

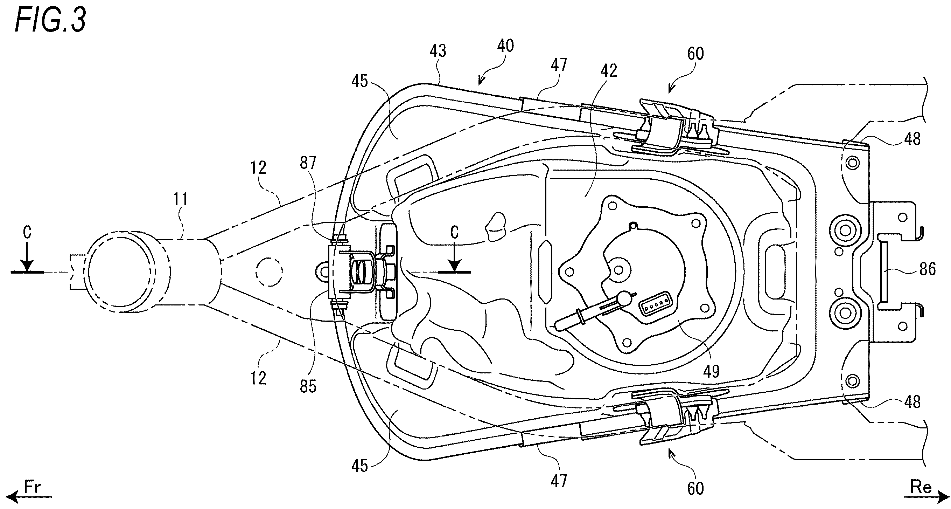

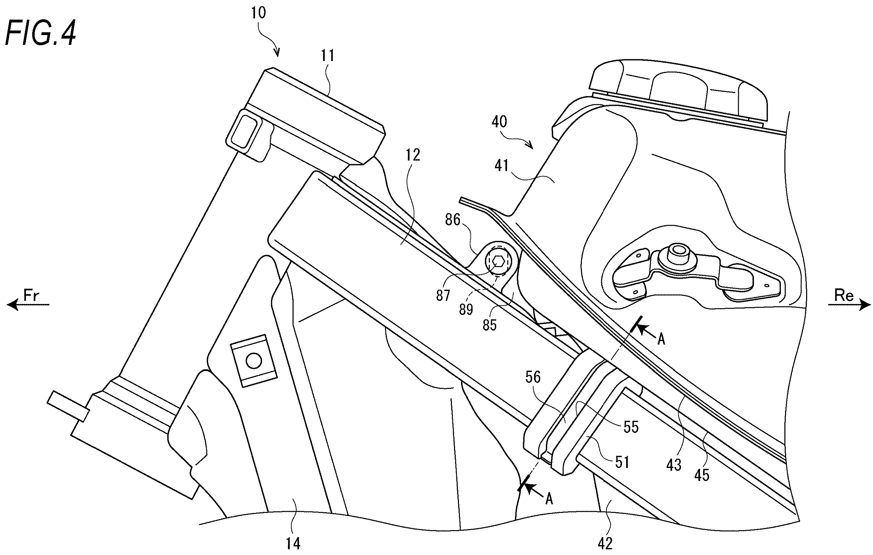

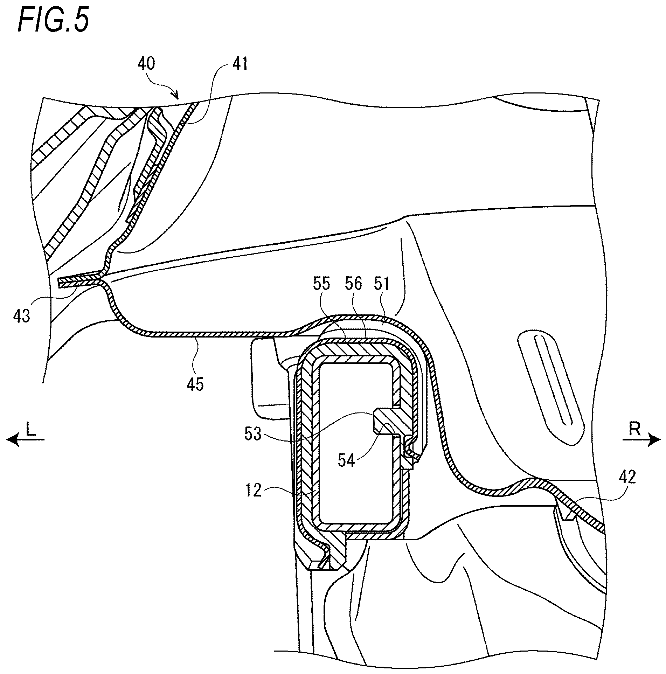

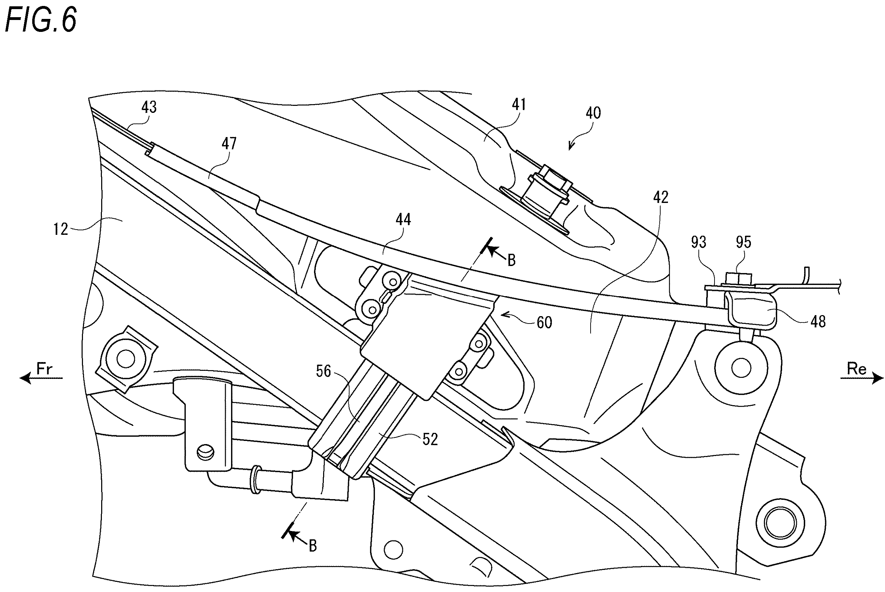

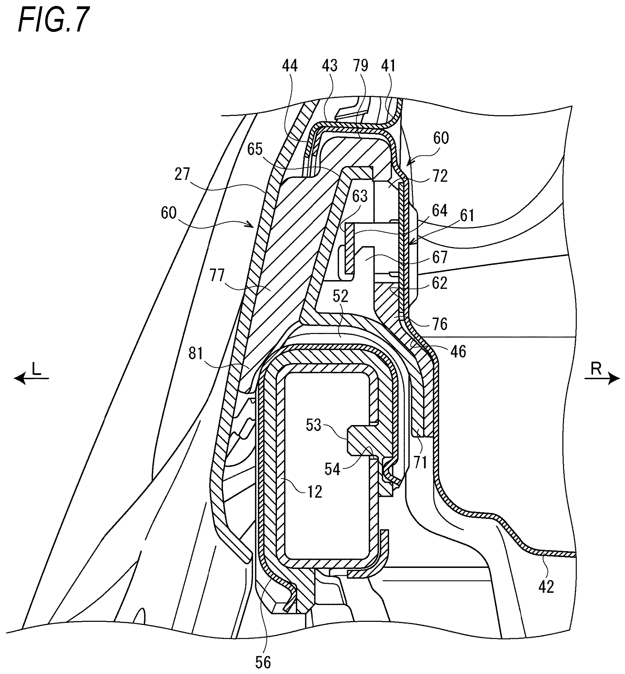

A support structure of the fuel tank will be described with reference to FIGS.2 to 7. FIG. 2 is a left side view of a periphery of the fuel tank of this example. FIG. 3 is a bottom view of the periphery of the fuel tank of this example. FIG. 4 is a left side view of a front portion of the fuel tank of this example. FIG. 5 is a cross-sectional view of the front portion of the fuel tank in FIG. 4 taken along a line A-A. FIG. 6 is a left side view of a rear portion of the fuel tank of this example. FIG. 7 is a cross-sectional view of the rear portion of the fuel tank in FIG. 6 taken along a line B-B. In addition, in FIG. 2, a tank cover and a front side cover are indicated by two-dot chain lines, and in FIG. 3, a vehicle body frame is indicated by a two-dot chain line.

As illustrated in FIGS. 2 and 3, at an upper portion of the vehicle body frame 10, the pair of tank rails 12 extend diagonally downward and rearward from an upper rear side of the head pipe 11, and the single down frame 14 extends downward from a lower rear side of the head pipe 11. Intermediate portions of the pair of tank rails 12 and an intermediate portion of the down frame 14 are connected via a pair of bridges 16 for reinforcement. The fuel tank 40 is supported from below by the pair of tank rails 12, and the fuel tank 40 and the pair of tank rails 12 are covered from above by the tank cover 26, and the fuel tank 40 and the pair of tank rails 12 are covered from both sides by the pair of front side covers 27.

The fuel tank 40 is a two-piece tank in which an upper panel 41 and a lower panel 42 are joined together. The upper panel 41 bulges upward in a dome shape, and the lower panel 42 bulges downward in a dome shape, with the upper panel 41 and the lower panel 42 forming a fuel storage space. An outer edge of the upper panel 41 and an outer edge of the lower panel 42 are seam-welded, and a flange 43 is formed at a joint between the upper panel 41 and the lower panel 42. In a side view, the flange 43 of the fuel tank 40 is curved in a downwardly bulging arc shape, and the flange 43 is hidden by the tank cover 26 and the pair of front side covers 27.

Below the front half of the flange 43, a support surface 45 having a flat shape is formed on the fuel tank 40 along the pair of tank rails 12. The rear half of the flange 43 is warped rearward so as to move away from the pair of tank rails 12. A pair of front rail cushions 51 are attached to front sides of the pair of tank rails 12, and a pair of rear rail cushions 52 are attached to rear sides of the pair of tank rails 12. The support surface 45 on a front side of the fuel tank 40 is supported from below by the pair of front rail cushions 51, and the rear half of the flange 43 of the fuel tank 40 is supported from below by the pair of rear rail cushions 52 via a pair of relay members 60.

A pair of front tank cushions 47 and a pair of rear tank cushions 48 are attached to the flange 43 of the fuel tank 40. The pair of front tank cushions 47 are attached to the flange 43 at intermediate positions in a front-rear direction, and the pair of rear tank cushions 48 are attached to the flange 43 at rear end positions. The pair of front tank cushions 47 and the pair of rear tank cushions 48 are folded back so as to cover side edges of the flange 43. The front tank cushion 47 faces a front side of an inner surface of the front side cover 27, and the rear tank cushion 48 faces a rear side of the inner surface of the front side cover 27.

In addition, a front tank bracket (tank side bracket) 85 is provided at a front end of the fuel tank 40, and a rear tank bracket 93 is provided at a rear end of the fuel tank 40. Front rail brackets (rail side brackets) 86 are provided on front sides of the pair of tank rails 12, and a rear rail bracket (not illustrated) is provided on a protrusion portion that protrudes upward from the body frame 13. The front tank bracket 85 and the front rail brackets 86 are laterally fastened with a bolt 87, and the rear tank bracket 93 and the rear rail bracket are fastened vertically with a bolt 95. A pump 49 of an in-tank type is provided at the bottom of the fuel tank 40.

As illustrated in FIGS. 4 and 5, the front rail cushion 51 made of rubber and having a rectangular shape in a side view is provided on the front side of the tank rail 12. The tank rail 12 is formed from a hollow square pipe material, and the top surface, outer surface, and upper half of the inner surface of the tank rail 12 are surrounded by the front rail cushion 51. A boss hole 54 is formed on an inner surface of the tank rail 12, and a boss 53 is formed on an inner surface of the front rail cushion 51. The boss 53 of the front rail cushion 51 is inserted into the boss hole 54 of the tank rail 12 to position the front rail cushion 51 relative to the tank rail 12.

The front rail cushion 51 has a holding groove 55 formed along an outer circumferential surface of the tank rail 12. A spring band 56 serving as a holding member is fitted into the holding groove 55, and the front rail cushion 51 is fastened from the outside against an outer circumferential surface of the tank rail 12 by the spring band 56. A spring force of the spring band 56 prevents the front rail cushion 51 from shifting relative to the tank rail 12. In addition, by fitting the spring band 56 into the holding groove 55, it becomes difficult to touch the spring band 56 and the spring band 56 becomes difficult to come off the front rail cushion 51.

In addition, both ends of the spring band 56 are bent outward, and both ends of the spring band 56 press against both ends of the front rail cushion 51 to prevent the ends of the front rail cushion 51 from separating (floating up) from the tank rail 12. Furthermore, when the spring band 56 is attached, both ends of the spring band 56 can move without getting caught in the holding grooves 55 of the front rail cushion 51, and the tank rail 12 is not damaged. The support surface 45 of the fuel tank 40 is supported on the tank rail 12 via this front rail cushion 51. The load of the fuel tank 40 is received by the tank rail 12, and vibrations are absorbed by the front rail cushion 51 between the tank rail 12 and the fuel tank 40.

As illustrated in FIGS. 6 and 7, the rear rail cushion 52 is provided on a rear side of the tank rail 12. The rear rail cushion 52 is formed in the same manner as the front rail cushion 51, and is attached to the tank rail 12 by a boss 53 and a spring band 56. The relay member 60 is attached to the side surface of the fuel tank 40, and the fuel tank 40 is supported on the tank rail 12 via the relay member 60 and the rear rail cushion 52. The load of the fuel tank 40 is received by the tank rail 12, and vibrations are absorbed by the relay member 60 and the rear rail cushion 52 between the tank rail 12 and the fuel tank 40.

In this case, the flange 43 of the fuel tank 40 is supported by the relay member 60, and the fuel tank 40 is supported on the tank rail 12 by utilizing the flange 43. The relay member 60 is located at a location where the flange 43 and the tank rail 12 overlap in a plan view (see FIG. 3), and where the flange 43 and the tank rail 12 are spaced apart in an up-down direction in a side view. The flange 43 is supported directly above by the tank rail 12. A predetermined area of the flange 43 rearward of the front tank cushion 47 is folded downward, and the relay member 60 is inserted inside a folded portion 44. The folded portion 44 increases the rigidity of the flange 43 and also positions the relay member 60.

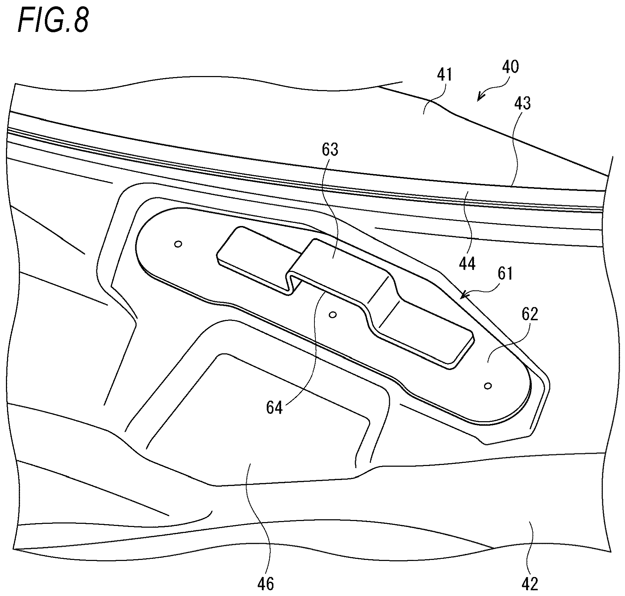

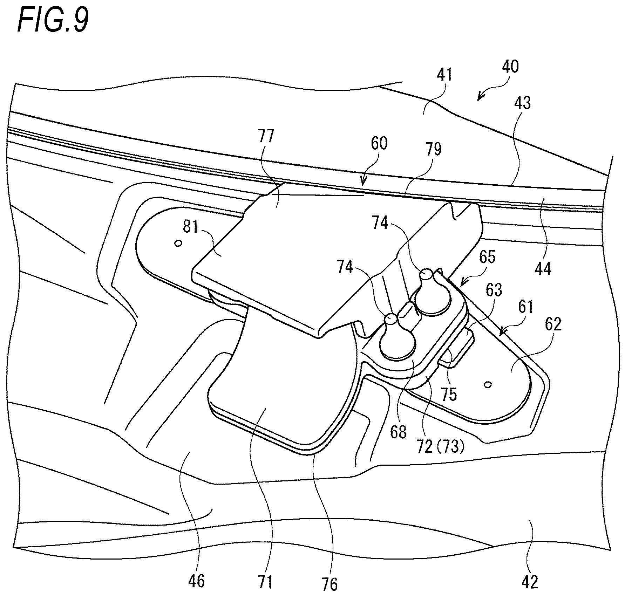

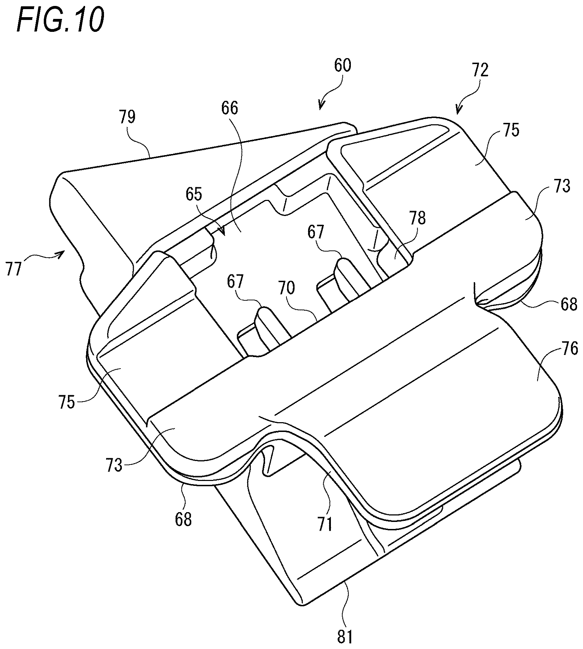

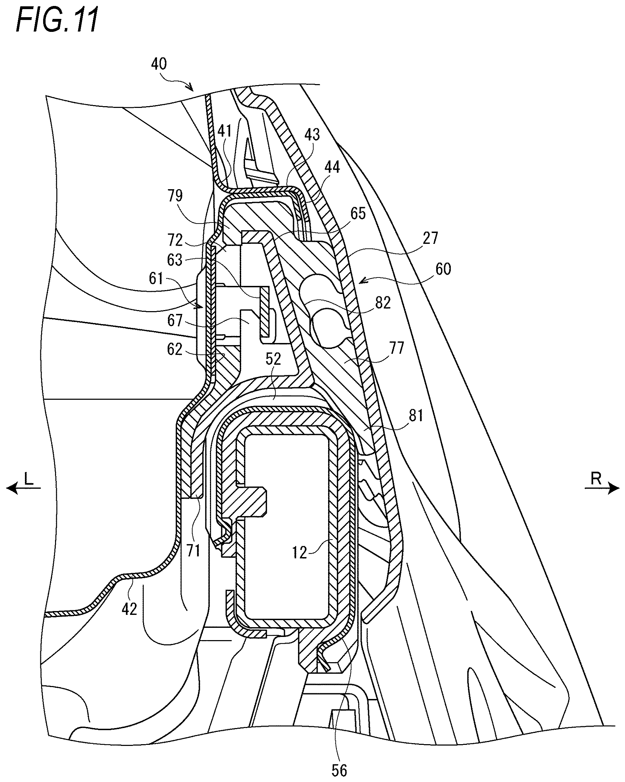

Next, the relay member will be described with reference to FIGS. 7 to 11. FIG. 8 is a perspective view of a mounting bracket of this example. FIG. 9 is a perspective view of the relay member of this example as viewed from a front surface side. FIG. 10 is a perspective view of the relay member of this example as viewed from a rear side. FIG. 11 is a cross-sectional view of the relay member on a right side of this example taken along the line B-B.

As illustrated in FIGS. 7 and 8, a mounting bracket 61 made of metal is fixed to a side surface of the fuel tank 40. The mounting bracket 61 is formed of a fixed plate 62 fixed to the side surface of the fuel tank 40 and a latch plate 63 bent into a hat shape on the fixed plate 62. Both side portions of the latch plate 63 are fixed to the fixed plate 62, and a middle portion of the latch plate 63 is spaced from the fixed plate 62 and has a latch hole 64 formed therein. In a side view, the latch plate 63 extends parallel to the tank rail 12, and the latch hole 64 of the latch plate 63 is formed in a direction perpendicular to an extension direction of the tank rail 12.

As illustrated in FIGS. 9 and 10, the relay member 60 is provided with a base portion 65 molded from a hard resin. The base portion 65 serves as a support for the relay member 60, and an inner cushion 72 made of rubber is provided on an inner surface of the base portion 65, and an outer cushion 77 made of rubber is provided on an outer surface of the base portion 65. A base body 66 of the base portion 65 is formed in a box shape that is open on the inside, and a pair of hooks 67 protrude upward from a bottom surface of the base body 66 toward the inside of the box. A pair of holding pieces 68 extend in the front-rear direction from the base body 66, and four holding holes (not illustrated) are formed in the pair of holding pieces 68. A curved piece 71 extends downward and inward from the base body 66.

The inner cushion 72 is formed along outer edges of the pair of holding pieces 68 and the curved piece 71, but the inner cushion 72 is cut out in a rectangular shape at a location corresponding to the base body 66. A pair of holding portions 73 of the inner cushion 72 are positioned inside the pair of holding pieces 68, and four protrusions 74 protruding outward from the pair of holding portions 73 are fitted into the holding holes of the pair of holding pieces 68. The pair of holding portions 73 have an inner surface formed with a concave surface 75 that is slightly wider than the latch plate 63. A notch 70 of the inner cushion 72 exposes the inside of the base body 66, and is formed so that the middle portion of the latch plate 63 can be inserted through the notch 70.

The outer cushion 77 is attached so as to cover the base body 66 from the outside. A claw hole (not illustrated) is formed in the base body 66, and a claw 78 of the outer cushion 77 fits into this claw hole, thereby attaching the outer cushion 77 to the base portion 65. An inclined surface 79 is formed on an upper portion of the outer cushion 77 so as to conform to the flange 43 of the fuel tank 40, thereby increasing a contact area between the outer cushion 77 and the flange 43. A protrusion portion 81 protrudes downward from a lower portion of the outer cushion 77, and a lower surface of the relay member 60 is formed into a substantially arch shape by the protrusion portion 81 of the outer cushion 77 and the curved piece 71 of the base portion 65.

As illustrated in FIGS. 7 and 9, the concave surfaces 75 of the inner cushion 72 are aligned with both side portions of the latch plate 63, and the pair of hooks 67 of the base portion 65 are inserted into the latch hole 64 of the latch plate 63, thereby attaching the relay member 60 to the mounting bracket 61. A step portion 46 is formed on the side surface of the fuel tank 40 below the latch plate 63, and the curved piece 71 of the base portion 65 and a curved cushion 76 of the inner cushion 72 fit into the step portion 46. As the base portion 65 is in contact with the side surface of the fuel tank 40 via the inner cushion 72, the fuel tank 40 is tightly attached to the relay member 60 by the inner cushion 72, the load of the fuel tank 40 is received, and vibrations are absorbed between the tank rail 12 and the fuel tank 40.

The relay member 60 is attached to the fuel tank 40, and the fuel tank 40 is supported on the tank rail 12 via the relay member 60. An upper portion of the outer cushion 77 fits inside the folded portion 44 of the flange 43, and the outer cushion 77 (inclined surface 79 portion) is interposed between the flange 43 and the base portion 65. The relay member 60 is placed on the rear rail cushion 52, and the rear rail cushion 52 is interposed between the base portion 65 and the tank rail 12. The load of the fuel tank 40 is transmitted from the flange 43 through the outer cushion 77 (inclined surface 79 portion) to the base portion 65, and the load transmitted to the base portion 65 is received by the tank rail 12 through the rear rail cushion 52.

The curved cushion 76 of the inner cushion 72 is in contact with the step portion 46 of the fuel tank 40, and the curved cushion 76 is interposed between the curved piece 71 of the base portion 65 and the step portion 46. An inner surface of the rear rail cushion 52 is aligned along the curved piece 71 of the base portion 65, and the rear rail cushion 52 is interposed between the curved piece 71 and the tank rail 12. The load of the fuel tank 40 is transmitted from the step portion 46 through the curved cushion 76 to the curved piece 71, and the load transmitted to the curved piece 71 is received by the tank rail 12 through the rear rail cushion 52. Vibrations are also absorbed by the rear rail cushion 52 between the tank rail 12 and the step portion 46.

The curved piece 71 of the base portion 65, the curved cushion 76 of the inner cushion 72, and the protrusion portion 81 of the outer cushion 77 extend downward below the upper surface of the tank rail 12. The curved piece 71 and the curved cushion 76 are positioned on the inside of the tank rail 12, and the protrusion portion 81 is positioned on the outside of the tank rail 12, so that not only the upper surface of the tank rail 12 (rear rail cushion 52) but also both side surfaces of the tank rail 12 are in contact with the relay member 60, thereby stably supporting the relay member 60 on the tank rail 12. The outer cushion 77 is in contact with the inner surface of the front side cover 27, so that even when the front side cover 27 receives a knee grip force, the front side cover 27 comes into contact with the outer cushion 77, thereby suppressing deformation of the front side cover 27.

As illustrated in FIG. 11, the relay member 60 on the right side is formed in substantially the same manner as the relay member 60 on the left side described above, but the outer cushion 77 of the relay member 60 on the right side is formed with a guide groove 82 for holding a cable (not illustrated). The outer cushion 77 functions as a cable guide, and the cables are routed inside the front side cover 27. By holding the cable in the guide groove 82 of the outer cushion 77, an increase in the vehicle width due to cable routing is suppressed, and the number of parts for fixing the cable is reduced. Furthermore, the cable will not be pinched between the front side cover 27 and the fuel tank 40 during knee gripping, or the like, and friction can be kept to a minimum. For example, in the case of a throttle cable, a throttle operation does not become heavy.

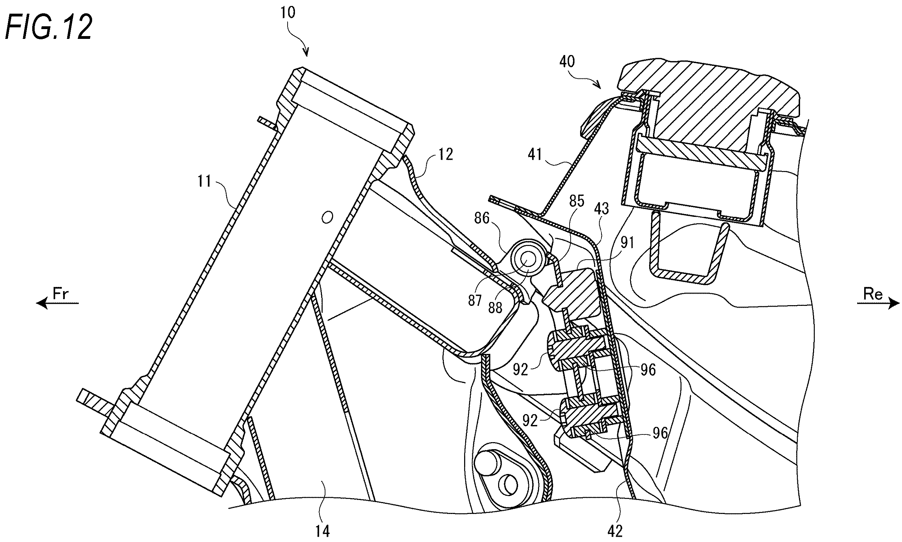

Referring to FIGS. 4, 6, and 12, the support structure at both front and rear ends of the fuel tank will be described. FIG. 12 is a cross-sectional view of the front portion of the fuel tank in FIG. 3 taken along a line C-C.

As illustrated in FIGS. 4 and 12, the front tank bracket 85 is supported on the front rail bracket 86 so as to be swingable about the bolt 87. A cylindrical portion of the front tank bracket 85 is positioned inside a pair of opposing pieces of the front rail brackets 86. A spacer 88 having a cylindrical shape is inserted into the cylindrical portion of the front tank bracket 85, and the spacer 88 is pinched between the pair of opposing pieces of the front rail brackets 86. The bolt 87 passes through the spacer 88 and a nut (not illustrated) is fastened to a tip of the bolt 87 that protrudes from the front rail bracket 86.

Even when the front tank bracket 85 and the front rail brackets 86 are laterally fastened by the bolt 87, the spacer 88 restricts deformation of the pair of opposing pieces of the front rail brackets 86. The front tank bracket 85 is not fastened to the pair of opposing pieces of the front rail brackets 86, and the swinging of the front tank bracket 85 is not hindered by lateral fastening of the bolt 87. By swinging the fuel tank 40 upward, components located below the fuel tank 40 are exposed upward without having to remove the fuel tank 40 from the tank rail 12, improving maintainability.

A through hole 89 of the front rail bracket 86 is an elongated hole extending vertically. The through holes 89 allow a relative positions of the front tank bracket 85 and the front rail bracket 86 to be flexibly changed in an up-down direction, thereby ensuring that the fuel tank 40 is supported on the tank rail 12. A plate-shaped portion of the front tank bracket 85 is floatingly fixed to a front surface of the fuel tank 40 by a screw 92 with a cushion 96 interposed therebetween. A relative position of the front tank bracket 85 to the fuel tank 40 can be flexibly changed in the front-rear direction by deformation of the cushion 96, so that errors in front and rear fixing positions of the fuel tank 40 can be absorbed. When a load is applied to the fuel tank 40 in a forward direction, the load is received not only by the cushion 96 but also by a cushion 91, thereby reducing (distributing) the load on the fuel tank 40.

As illustrated in FIG. 6, a rear tank bracket 93 is vertically fastened to the rear rail bracket (not illustrated) by the bolt 95. The fuel tank 40 is floatingly fixed to the rear rail bracket by means of a cushion (not illustrated) and the rear tank bracket 93 with the bolt 95. A relative position of the fuel tank 40 with respect to the rear rail bracket is flexibly changed in the up-down direction by the deformation of the cushion, so that errors in upper and lower fixing positions are absorbed. By finely adjusting a vertical position of the fuel tank 40, the fuel tank 40 is supported on the tank rail 12 via the relay member 60 or the like, and the load of the fuel tank 40 is distributed.

As described above, in the saddle-type vehicle 1 of this example, the support surface 45 on the front side of the fuel tank 40 is supported by the pair of tank rails 12, and the rear side of the fuel tank 40 is supported by the pair of tank rails 12 via the pair of relay members 60. As a result, the load of the fuel tank 40 is distributed over a wide area of the pair of tank rails 12 via the support surface 45 and the pair of relay members 60, and the fuel tank 40 is stably supported on the pair of tank rails 12.

In this example, the support surface on the front side of the fuel tank is supported by the pair of tank rails, and the rear side of the fuel tank is supported by the pair of tank rails via the pair of relay members, but it is sufficient when the fuel tank is supported by the pair of tank rails via the pair of relay members at a position offset in the front-rear direction from the support surfaces of the fuel tank. For example, support surfaces on the rear side of the fuel tank may be supported by a pair of tank rails, and the front side of the fuel tank may be supported on pair of tank rails via a pair of relay members.

Further, in this example, the inner cushion and the outer cushion are provided on the base portion, but it is sufficient that the base portion is provided with a cushion portion that can be interposed between the base portion and the fuel tank. For example, the base portion may be provided with three or more cushions, or may be provided with a single cushion.

Further, in this example, the relay member is formed of a plurality of members, but the relay member may be formed of a single member. For example, the entire relay member may be made of a rubber material.

Furthermore, in this example, the fuel tank is formed by joining the upper panel and the lower panel, but the fuel tank may be any tank that has a fuel storage space. The fuel tank does not have to be formed with a flange. That is, a portion of the fuel tank other than the flange may be supported by the pair of tank rails via a relay member.

**In** addition, in this example, the rear half of the flange is folded downward, but it is sufficient that a predetermined range of the flange in the front-rear direction is folded back. For example, a substantially front half of the flange may be folded downward, or the flange may be folded upward.

Further, in this example, a pair of front rail cushions and a pair of rear rail cushions are provided on a pair of tank rails, but six or more rail cushions may be provided on the pair of tank rails.

In addition, in this example, an example in which the holding member is a spring band is described, but the holding member may be any member capable of fastening the rail cushion to the tank rail. For example, the holding member may be a cable tie. The rail cushion may also be held to the tank rail by adhesive or double-sided tape.

Furthermore, a fuel tank support structure of this example is not limited to being adopted in the above-described off-road type saddle-type vehicle, and may be adopted in other types of saddle-type vehicles. A saddle-type vehicle is not limited to all vehicles in which a rider sits astride a seat, but also includes scooter-type vehicles in which a rider does not sit astride a seat.

As described above, a saddle-type vehicle of a first aspect includes a pair of tank rails (12) extending rearward from a head pipe (11), a fuel tank (40) supported from below by the pair of tank rails, and a pair of relay members (60) attached to both side surfaces of the fuel tank, where a support surface (45) supported by the pair of tank rails is formed on a bottom surface of the fuel tank, and the fuel tank is supported by the pair of tank rails via the pair of relay members at a position offset from the support surface in a front-rear direction. According to this configuration, the support surface of the fuel tank is supported by the pair of tank rails. At a position which is offset from the support surface of the fuel tank in the front-rear direction and at which the fuel tank is separated from the pair of tank rails due to the fuel tank's posture, shape, or the like, the fuel tank is supported on the pair of tank rails using the pair of relay members. As a result, a load of the fuel tank is distributed over a wide area of the pair of tank rails via the support surface and the pair of relay members, and the fuel tank is stably supported on the pair of tank rails.

In a second aspect, in the first aspect, the pair of relay members each have a base portion (65) having hard properties and serving as a support and a cushion portion (inner cushion 72, outer cushion 77) installed on the base portion, and the cushion portion is interposed between the base portion and the fuel tank. According to this configuration, the fuel tank is supported by the base portion which serves as a support. Furthermore, the cushion portions bring the fuel tank into close contact with the pair of relay members, and also absorb vibrations between the pair of tank rails and the fuel tank.

In a third aspect, in the second aspect, the fuel tank is made up of an upper panel (41) and a lower panel (42), and a flange (43) is formed at a joint between the upper panel and the lower panel, and the flange is supported by the relay member, and the cushion portion is interposed between the base portion and the flange. According to this configuration, the load of the fuel tank is transmitted from the flange via the cushion portion to the base portion, and the load transmitted to the base portion is received by the pair of tank rails. In addition, the fuel tank is stably supported on the pair of tank rails by utilizing the flange of the fuel tank.

In a fourth aspect, in the third aspect, the pair of relay members are located at a location where the flange and the pair of tank rails overlap in a plan view and where the flange and the pair of tank rails are spaced apart in an up-down direction in a side view. According to this configuration, the flange of the fuel tank is supported directly above by the pair of tank rails.

In a fifth aspect, in the third or fourth aspect, a predetermined range of the flange in the front-rear direction is folded back downward, and the pair of relay members are inserted inside the folded portion (44). According to this configuration, the rigidity of the flange is increased by the folded portion, and the pair of relay members are positioned.

In a sixth aspect, in the second to fifth aspects, the cushion portion has an inner cushion (72) disposed on an inner surface of the base portion, and the base portion is in contact with a side surface of the fuel tank via the inner cushion. According to this configuration, the fuel tank is brought into close contact with the relay member by the inner cushion, and vibrations are absorbed between the pair of tank rails and the fuel tank.

In a seventh aspect, in the sixth aspect, a step portion (46) is formed on a side surface of the fuel tank, and the inner cushion is in contact with the step portion. According to this configuration, the load is received by the tank rail from the step portion of the fuel tank via the inner cushion.

In an eighth aspect, in the sixth or seventh aspect, the cushion portion has an outer cushion (77) disposed on an outer surface of the base portion, and the outer cushion and the inner cushion extend below an upper surface of the tank rail. According to this configuration, not only the upper surface of the tank rail but also both side surfaces of the tank rail are in contact with the relay member, so that the relay member is stably supported on the tank rail.

In a ninth aspect, in the eighth aspect, a pair of side covers (front side covers 27) are provided to cover the fuel tank from outside in a vehicle width direction, and the outer cushion is in contact with an inner surface of the side cover. According to this configuration, even when the side cover receives a knee grip force, the side cover comes into contact with the outer cushion, thereby suppressing deformation of the side cover.

In a tenth aspect, in the eighth or ninth aspect, the outer cushion is formed with a guide groove (82) for holding a cable. According to this configuration, the outer cushion functions as a cable guide, and the cables are routed inside the side cover. By holding the cable in the guide groove of the outer cushion, an increase in vehicle width due to cable routing is suppressed, and the number of parts for fixing the cable can be reduced. In addition, friction is reduced as the cable does not get pinched between the side cover and the fuel tank when knee gripping, or the like.

In an eleventh aspect, in any one of the first to tenth aspects, a plurality of rail cushions (front rail cushion 51, rear rail cushion 52) are provided on the pair of tank rails, and the fuel tank is supported on the pair of tank rails via the plurality of rail cushions. According to this configuration, vibrations are absorbed by the plurality of rail cushions between the pair of tank rails and the fuel tank.

In a twelfth aspect, in the eleventh aspect, a step portion is formed on a side surface of the fuel tank, and the plurality of rail cushions are interposed between the step portions and the pair of tank rails. According to this configuration, vibrations directed from the pair of tank rails toward the step portion of the fuel tank are absorbed by the plurality of rail cushions.

In a thirteenth aspect, in the eleventh or twelfth aspect, a plurality of boss holes (54) are formed in the pair of tank rails, and bosses (53) to be inserted into the boss holes are formed in the plurality of rail cushions. According to this configuration, the plurality of rail cushions are positioned relative to the pair of tank rails.

In a fourteenth aspect, in any one of the first to thirteenth aspects, the plurality of rail cushions are fastened from outside to outer circumferential surfaces of the pair of tank rails by holding members (spring bands 56). According to this configuration, misalignment of the plurality of rail cushions relative to the pair of tank rails is suppressed.

In a fifteenth aspect, in the fourteenth aspect, the plurality of rail cushions are provided with holding grooves (55) along the outer circumferential surfaces of the pair of tank rails, and the holding member is a spring band (56) that fits into the holding groove. According to this configuration, the spring band fits into the holding groove, making it difficult for the spring band to be touched and difficult for the spring band to come off the front rail cushion.

In a sixteenth aspect, in any one of the first to fifteenth aspects, a tank side bracket (front tank bracket 85) is provided at a front end or a rear end of the fuel tank, a pair of rail side brackets (front rail brackets 86) are provided on the pair of tank rails, the tank side bracket and the pair of rail side brackets are laterally fastened together by a bolt (87), and a through hole (89) of at least one of the tank side bracket and the pair of rail side brackets is an elongated hole extending in an up-down direction. According to this configuration, relative positions of the tank side bracket and the rail side bracket can be flexibly changed in the up-down direction by the elongated hole, so that the fuel tank can be reliably supported by the pair of tank rails.

In a seventeenth aspect, in the sixteenth aspect, the tank side bracket is floatingly fixed to the fuel tank. According to this configuration, a relative position of the tank side bracket with respect to the fuel tank can be flexibly changed in the front-rear direction, absorbing errors in fixing positions of the front and rear of the fuel tank.

In an eighteenth aspect, in the sixteenth or seventeenth aspect, the tank side bracket is supported swingably about the bolt with respect to the pair of rail side brackets. According to this configuration, by swinging the fuel tank upward, components located below the fuel tank are exposed upward without having to remove the fuel tank from the pair of tank rails, improving maintainability.

Although the present example is described, other examples may be made by combining the above-described example and modification examples in whole or in part.

Furthermore, the technology of the present invention is not limited to the above-described examples, and may be modified, substituted, or changed in various ways without departing from the spirit and scope of the technical concept. Furthermore, when technological advances or derived technologies allow the technical ideas to be realized in a different way, they may be implemented using that method. Therefore, the claims cover all embodiments that may fall within the scope of the technical concept.

### REFERENCE SIGNS LIST

1: saddle-type vehicle
10: vehicle body frame
11: head pipe
12: tank rail
27: front side cover (side cover)
40: fuel tank
41: upper panel
42: lower panel
43: flange
44: folded portion of flange
45: support surface
46: step portion
51: front rail cushion (rail cushion)
52: rear rail cushion (rail cushion)
53: boss
54: boss hole
55: holding groove
56: spring band (holding member)
60: relay member
65: base portion
72: inner cushion
77: outer cushion
81: protrusion portion
82: guide groove
85: front tank bracket (tank side bracket)
86: front rail bracket (rail side bracket)
87: bolt
89: through hole

## Claims

1. A saddle-type vehicle (1), comprising:
a pair of tank rails (12) extending rearward from a head pipe (11);
a fuel tank (40) supported from below by the pair of tank rails; and
a pair of relay members (60) attached to both side surfaces of the fuel tank, wherein
a support surface (45) supported by the pair of tank rails is formed on a bottom surface of the fuel tank, and
the fuel tank is supported by the pair of tank rails via the pair of relay members at a position offset from the support surface in a front-rear direction.

2. The saddle-type vehicle according to claim 1, wherein
the pair of relay members each have a base portion having hard properties and serving as a support and a cushion portion installed on the base portion, and
the cushion portion is interposed between the base portion and the fuel tank.

3. The saddle-type vehicle according to claim 2, wherein
the fuel tank is made up of an upper panel and a lower panel, and a flange is formed at a joint between the upper panel and the lower panel, and
the flange is supported by the relay member, and the cushion portion is interposed between the base portion and the flange.

4. The saddle-type vehicle according to claim 3, wherein the pair of relay members are located at a location where the flange and the pair of tank rails overlap in a plan view and where the flange and the pair of tank rails are spaced apart in an up-down direction in a side view.

5. The saddle-type vehicle according to claim 3, wherein a predetermined range of the flange in the front-rear direction is folded back downward, and the pair of relay members are inserted inside the folded portion.

6. The saddle-type vehicle according to claim 2, wherein
the cushion portion has an inner cushion disposed on an inner surface of the base portion, and
the base portion is in contact with a side surface of the fuel tank via the inner cushion.

7. The saddle-type vehicle according to claim 6, wherein a step portion is formed on the side surface of the fuel tank, and the inner cushion is in contact with the step portion.

8. The saddle-type vehicle according to claim 6, wherein
the cushion portion has an outer cushion disposed on an outer surface of the base portion, and
the outer cushion and the inner cushion extend below an upper surface of the tank rail.

9. The saddle-type vehicle according to claim 8, wherein
a pair of side covers are provided to cover the fuel tank from outside in a vehicle width direction, and
the outer cushion is in contact with an inner surface of the side cover.

10. The saddle-type vehicle according to claim 8, wherein the outer cushion is formed with a guide groove for holding a cable.

11. The saddle-type vehicle according to claim 1 or 2, wherein a plurality of rail cushions are provided on the pair of tank rails, and the fuel tank is supported on the pair of tank rails via the plurality of rail cushions.

12. The saddle-type vehicle according to claim 11, wherein a step portion is formed on a side surface of the fuel tank, and the plurality of rail cushions are interposed between the step portions and the pair of tank rails.

13. The saddle-type vehicle according to claim 11, wherein boss holes are formed in the pair of tank rails, and bosses to be inserted into the boss holes are formed in the plurality of rail cushions.

14. The saddle-type vehicle according to claim 11, wherein the plurality of rail cushions are fastened from outside to outer circumferential surfaces of the pair of tank rails by holding members.

15. The saddle-type vehicle according to claim 14, wherein
the plurality of rail cushions are provided with holding grooves along the outer circumferential surfaces of the pair of tank rails, and
the holding member is a spring band that fits into the holding groove.

16. The saddle-type vehicle according to claim 1 or 2, wherein
a tank side bracket is provided at a front end or a rear end of the fuel tank,
a pair of rail side brackets are provided on the pair of tank rails,
the tank side bracket and the pair of rail side brackets are laterally fastened together by a bolt, and
a through hole of at least one of the tank side bracket and the pair of rail side brackets is an elongated hole extending in an up-down direction.

17. The saddle-type vehicle according to claim 16, wherein the tank side bracket is floatingly fixed to the fuel tank.

18. The saddle-type vehicle according to claim 16, wherein the tank side bracket is supported swingably about the bolt with respect to the pair of rail side brackets.
